# EUROPÄISCHE PATENTSCHRIFT

(11) **EP 1 462 773 B1**
(45) Veröffentlichungstag und Bekanntmachung des Hinweises auf die Patenterteilung: **17.07.2013**
(21) Anmeldenummer: 04008268.7
(22) Anmeldetag: 02.09.1998
(51) Int. Cl.: G01D 11/24

(54) **Gehäuse für Messaufnehmer**
Sensor housing
Boîtier d'un capteur

(43) Veröffentlichungstag der Anmeldung: 29.09.2004
(62) Teilanmeldung aus: 98116545.9
(73) Patentinhaber: Endress + Hauser GmbH + Co. KG, 79689 Maulburg (DE)
(72) Erfinder: Dreyer, Volker, 79541 Lörrach (DE); Kuhny, Jutta, 79541 Lörrach (DE)
(74) Vertreter: Andres, Angelika Maria

(56) Entgegenhaltungen:
- DE-A1- 4 120 752

## Beschreibung

Die Erfindung betrifft einen Meßaufnehmer mit einem Sensorraum, in dem ein Sensor angeordnet ist, und mit einem Elektronikraum, in dem ein eine Elektronik enthaltender Einsatz angeordnet ist.

Meßaufnehmer bilden die Basis der industriellen Meß- und Regeltechnik. So werden z.B. in nahezu allen Anlagen der Großindustrie, z.B. in der Chemie, in der Lebensmittelindustrie oder in Wasseraufbereitungsanlagen, Meßaufnehmer eingesetzt, um Prozeßgrößen, wie z.B. Druck, Temperatur, Füllstand, Durchfluß oder andere Meßgrößen, vor Ort zu messen und/oder zu überwachen. Die Meßaufnehmer sind an einem Meßort angeordnet und enthalten einen Sensor, der die gewünschte Prozeßgröße erfaßt und in eine elektrische Größe umwandelt. Die elektrische Größe wird einer Elektronik zugeführt, die diese weiterverarbeitet und in ein elektrisches Ausgangssignal umwandelt, das eine Anzeige und/oder eine Weiterleitung des Meßergebnisses ermöglicht.

Der Elektronikraum muß eine verschließbare Öffnung aufweisen, durch die der Einsatz in den Elektronikraum eingeführt werden kann. Zusätzlich ist die Elektronik an den Sensor anzuschließen. Hierzu ist ein Durchgang vorzusehen, der eine Verbindung zwischen dem Sensorraum und dem Elektronikraum herstellt und durch den hindurch der elektrische Anschluß des Sensors an die Elektronik erfolgt.

In der DE-A 41 20 752 ist ein derartiger Meßaufnehmer gezeigt, der umfasst:
- einen in einem ersten Gehäuse angeordneten Sensorraum, in dem ein Sensor untergebracht ist,
- ein eine Elektronik enthaltendes zweites Gehäuse, sowie
- ein Anschlusselement zum elektrischen Anschließen des Sensors an die Elektronik,
- wobei die beiden Gehäuse miteinander derart lösbar verbunden sind, dass zwischen dem Sensorraum und dem Elektronikraum ein Durchgang gebildet ist, durch den der Elektronikraum mit dem Sensorraum verbunden ist, und
- wobei das Anschlusselement in dem Durchgang drehbar angeordnet ist und diesen nicht dicht verschließt.

Im Inneren des Meßaufnehmers besteht somit ein durchgehender Hohlraum. Da Meßaufnehmer regelmäßig wechselnden Umgebungsbedingungen, vor allem Temperaturschwankungen, ausgesetzt sind, besteht somit die Gefahr, daß Feuchtigkeit eindringt, die die Funktion des Sensors und/oder der Elektronik stark beeinträchtigen kann.

Feuchtigkeit dringt zum Beispiel dann ein, wenn warme Luft, mit hoher Luftfeuchtigkeit in den Sensorraum und/oder den Elektronikraum eindringt und dort abkühlt. Beim Abkühlen kondensiert die in der Luft enthaltene Feuchtigkeit und das angesammelte Wasser kann anschließend nicht mehr oder nur sehr langsam aus dem Inneren des Meßaufnehmers entweichen.

Desweiteren kann Feuchtigkeit eindringen, wenn z.B. ein Temperaturgradient zwischen dem Inneren des Meßaufnehmers und dessen Umgebung besteht und der Taupunkt im Inneren des Meßaufnehmers unterschritten wird. Auch in diesem Fall bildet sich Kondensat im Inneren des Meßaufnehmers, und das so entstehende Wasser kann anschließend nicht mehr oder nur sehr langsam aus dem Inneren des Meßaufnehmers entweichen.

Es ist eine Aufgabe der Erfindung, einen Meßaufnehmer anzugeben, bei dem der Sensor dauerhaft vor Feuchtigkeit geschützt ist.

Hierzu besteht die Erfindung in einem Meßaufnehmer
- mit einem Sensorraum,
- in dem ein Sensor angeordnet ist, und
- mit einem Elektronikraum,
   - - in dem ein eine Elektronik enthaltender Einsatz angeordnet ist,
- wobei zwischen dem Sensorraum und dem Elektronikraum ein Durchgang besteht, durch den der Elektronikraum mit dem Sensorraum verbunden ist, und
- wobei ein Anschlußelement zum elektrischen Anschluß des Sensors an die Elektronik vorgesehen ist,
   - - das integraler Bestandteil des Einsatzes ist,
   - - das sich in den Durchgang hinein erstreckt und
   - - das den Durchgang verschließt.

Gemäß einer bevorzugten Ausführungsform sind die freien Hohlräume im Inneren des Einsatzes und des in den Einsatz integrierten Anschlußelements mit einer Vergußmasse ausgefüllt.

Gemäß einer weiteren bevorzugten Ausführungsform ist zwischen dem Durchgang und dem Anschlußelement eine Dichtung vorgesehen.

Gemäß einer weiteren bevorzugten Ausführungsform ist in einer Außenwand des Elektronikraums ein Luftfilter angeordnet.

Gemäß einer weiteren bevorzugten Ausführungsform ist der Elektronikraum mit einem lösbaren Deckel verschlossen.

Dieser Meßaufnehmer bietet den Vorteil, daß der Innenraum trotz des notwendigen Durchgangs zwischen dem Sensorraum und dem Elektronikraum in zwei getrennte Abschnitte aufgeteilt ist. Damit ist das Volumen des Hohlraums, das bei Temperaturwechseln als Luft einsaugendes Pumpvolumen wirken kann, praktisch auf das in dem Elektronikraum verbleibende freie Volumen beschränkt. Feuchtigkeit kann von außen, wenn überhaupt, dann nur in den Elektronikraum eindringen. Der Sensorraum ist verschlossen, und ein Luftaustausch zwischen Sensorraum und Elektronikraum findet praktisch nicht statt.

Ein weiterer Vorteil dieses Meßaufnehmers besteht darin, daß er modular aufgebaut ist. Elektronik und Sensor sind separate Bausteine, die unabhängig voneinander eingesetzt werden können und lediglich durch das Anschlußelement miteinander zu verbinden sind. Damit kann der Meßaufnehmer mit geringem Aufwand gefertigt werden und bietet ein hohes Maß an Flexibilität. Es kann z.B. ein Baukasten aus verschiedenen Elektroniken und verschiedenen Sensortypen vorgesehen werden, die beliebig miteinander kombinierbar sind.

Die Erfindung und weitere Vorteile werden nun anhand der Figur der Zeichnung, in der ein Ausführungsbeispiel dargestellt ist, näher erläutert.

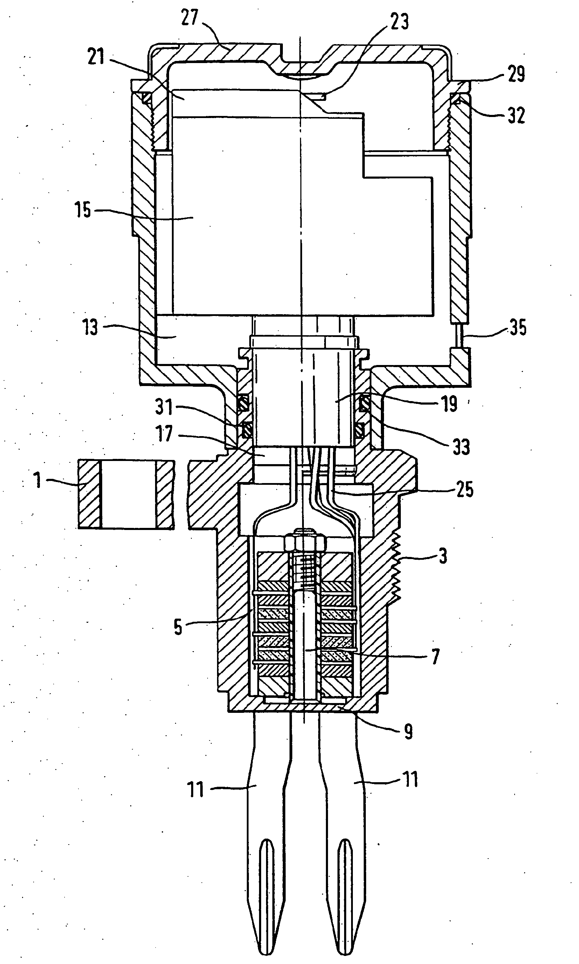

Fig. 1 zeigt einen Schnitt durch einen Meßaufnehmer.

In Fig. 1 ist ein erfindungsgemäßer Meßaufnehmer dargestellt. Der Meßaufnehmer ist an einem Meßort zu befestigen. Hierzu weist der Meßaufnehmer, z.B. wie auf der linken Seite von *Fig. 1* dargestellt, einen daran angeformten Flansch 1 auf, mit dem der Meßaufnehmer auf einen entsprechenden Gegenflansch montierbar ist. Genausogut kann der Meßaufnehmer, wie auf der rechten Seite von Fig. 1 dargestellt, ein Außengewinde 3 aufweisen mittels dessen er in eine Öffnung, z.B. in einen Tank oder einen Behälter, einschraubbar ist.

Der Meßaufnehmer weist einen Sensorraum 5 auf, indem ein Sensor 7 angeordnet ist. Der Sensor 7 kann z.B. ein Drucksensor, ein Temperatursensor, eine kapazitive Füllstandssonde, ein Ultraschallsensor oder ein Mikrowellen sendendes und empfangendes Mikrowellenmodul oder ein Durchflußmesser sein.

Bei dem gezeigten Ausführungsbeispiel umfaßt der Sensor 7 einen elektromechanischen Wandler eines Füllstandsgrenzschalters. Der Sensorraum 5 ist von einem topfförmigen Gehäuse abgeschlossen. Der Boden des topfförmigen Gehäuses bildet eine Membran 9, an deren nach außen weisenden Seite zwei voneinander beabstandet angeordnete Schwingstäbe 11 endseitig befestigt sind. Die Membran 9 wird durch den elektromechanischen Wandler in Schwingungen versetzt. Aufgrund der Membranschwingung führen die Schwingstäbe 11 Schwingungen senkrecht zu deren Längsachse aus.

Der elektromechanische Wandler ist in dem gezeigten Ausführungsbeispiel ein Stapel von piezoelektrischen Elementen, von denen mindestens eines als Sender arbeitet und die Membran in Schwingungen versetzt und mindestens eines als Empfänger arbeitet und die Schwingungen der Membran aufnimmt.

Der Meßaufnehmer ist an einem Behälter so zu befestigen, daß die Schwingstäbe 11 auf der Höhe eines vorbestimmten Füllstandes, dessen Erreichen festgestellt und/oder überwacht werden soll, in den Behälter hineinragen. Die Schwingungseigenschaften des Schwingungsgebildes hängen davon ab, ob die Schwingstäbe von einem in dem Behälter befindlichen Füllgut bedeckt sind oder ob sie frei schwingen. Es kann z.B. Frequenz, Amplitude oder Dauer des Ausschwingens des Schwingungsgebildes im Anschluß an eine kurzzeitige Schwingungsanregung gemessen und ausgewertet werden. Genauso ist es auch möglich, das Schwingungsgebilde permanent zu Schwingungen, z.B. bei dessen Resonanzfrequenz, anzuregen und Amplitude und/oder Frequenz dieser Schwingung aufzunehmen und auszuwerten.

Neben dem Sensorraum 5 weist der Meßaufnehmer weiter einen Elektronikraum 13 auf. In diesem ist ein Einsatz 15 angeordnet, in dem sich eine in Fig. 1 nicht dargestellte Elektronik befindet.

Zwischen dem Sensorraum 5 und dem Elektronikraum 13 besteht ein Durchgang 17, durch den der Elektronikraum 13 mit dem Sensorraum 5 verbunden ist.

Es ist ein Anschlußelement 19 zum elektrischen Anschluß des Sensors 7 an die Elektronik vorgesehen. Das Anschlußelement 19 ist integraler Bestandteil des Einsatzes 15. Es erstreckt sich in den Durchgang 17 hinein und verschließt den Durchgang 17. Hierzu weist das sensor-zugewandte Ende des Anschlußelements 19 eine Außengeometrie auf, die gleich einer Innengeometrie des Durchgangs 17 ist. Damit ist der Durchgang 17 verschlossen und der Sensorraum 5 und der Elektronikraum 13 sind voneinander getrennt. Vorzugsweise ist zwischen dem Durchgang 17 und dem Anschlußelement 19 eine Dichtung 31 vorgesehen.

Für den in Fig. 1 dargestellten Fall, daß der Sensorraum 5 und der Elektronikraum 13 von zwei getrennten Gehäusen begrenzt sind, ist vorzugsweise auch dort, wo die beiden Gehäuse aneinandergrenzen, bzw. wie in Fig. 1 dargestellt, überlappen, ebenfalls eine Dichtung 33 vorzusehen. In Fig. 1 weisen die beiden Gehäuse jeweils einen zylindrischen Abschnitt auf und die beiden zylindrischen Abschnitte umgreifen einander koaxial. Der innere zylindrische Abschnitt weist eine ringförmig umlaufende Nut auf, in der die Dichtung 33 angeordnet ist.

Einsatz 15 und Anschlußelement 19 sind vorzugsweise ein einteiliges Kunststoffgehäuse. Der Einsatz 15 weist an dessen anschlußelement-abgewandter Seite eine Öffnung auf, durch die die Elektronik einbringbar ist. Die Elektronik ist vorzugsweise eine auf einer oder mehreren Leiterplatten montierte elektronische Schaltung und die Leiterplatten sind in Steckplätze im Inneren des Einsatzes 15 einsteckbar. An den Steckplätzen sind elektrische Kontaktelemente vorgesehen, die beim Einstecken der Leiterplatten einen elektrischen Kontakt herstellen.

Auf der sensor-zugewandten Seite des Anschlußelements 19 sind Anschlüsse vorgesehen, an die der Sensor 7 anschließbar ist. Diese Anschlüsse sind z.B. Klemmstecker, in die Anschlußleitungen 25 des Sensors 7 einsteckbar sind. In dem gezeigten Ausführungsbeispiel sind die Anschlußleitungen 25 Leitungen, die direkt mit den Elektroden der piezoelektrischen Elemente verbunden sind. Die Anschlüsse sind im Inneren des Anschlußelements 19 ebenfalls jeweils mit einem Kontaktelement verbunden und darüber an die elektrische Schaltung angeschlossen.

Die Öffnung des Einsatzes 15 ist durch einen vorzugsweise aufrastbaren Deckel 21 verschlossen. Auf dem Deckel 21 sind Anschlußklemmen 23 vorgesehen, von denen jede elektrisch leitend mit einem Kontaktelement und somit mit einer der Leiterplatten verbunden ist. Über diese Anschlußklemmen 23 kann der Meßaufnehmer mit Energie versorgt werden und das Ausgangssignal des Meßaufnehmers kann abgenommen werden.

Vorzugsweise sind verbleibende freie Hohlräume im Inneren des Einsatzes 15 und des in den Einsatz 15 integrierten Anschlußelements 19 mit einer Vergußmasse, z.B. einem Silikongel, ausgefüllt.

Der Elektronikraum 13 weist eine Öffnung auf, durch die hindurch der Einsatz 15 mit dem integrierten Anschlußelement 19 bei der Montage einzuführen ist. Die Öffnung ist mit einem lösbaren Deckel 27 verschlossen. Dieser weist ein Außengewinde auf und ist in die Öffnung eingeschraubt. Weiter weist der Deckel 27 eine sich radial nach außen erstreckende Schulter 29 auf, die im montierten Zustand auf einer die Öffnung begrenzenden Ringfläche aufliegt. In der Ringfläche ist eine Nut zur Aufnahme einer Dichtung 31, in dem gezeigten Ausführungsbeispiel ist dies ein O-Ring aus einem Elastomer, angeordnet. Die Öffnung ist somit zum einen durch das Außengewinde und zum anderen durch die Dichtung 32 abgedichtet.

Bei geöffnetem Deckel 27 sind die Anschlußklemmen 23 zugänglich. Üblicherweise ist eine in Fig. 1 nicht dargestellte hermetisch dichte Durchführung vorgesehen, durch die hindurch von außen Leitungen in den Elektronikraum 5 eingeführt sind, die dann an die Anschlußklemmen 23 anzuschließen sind.

Durch den zuvor beschriebenen Aufbau ist erreicht, daß der Sensorraum 5 von dem Elektronikraum 13 getrennt ist und mit der Dichtung 31 sogar hermetisch dicht abgeschlossen ist.

Der Sensor 7 ist somit vollständig vor Feuchtigkeit geschützt.

Es kann jedoch aufgrund der erforderlichen Öffnungen des Elektronikraums 13 nicht vollständig ausgeschlossen werden, daß Feuchtigkeit in diesen eindringt. Zwar ist die Elektronik durch den sie umgebenden Einsatz 15 und ggf. durch die Vergußmasse geschützt, es empfiehlt sich jedoch trotzdem, die Menge der eindringenden Feuchtigkeit möglichst gering zu halten. Hierzu ist vorzugsweise in einer Außenwand des Elektronikraumes 13 ein wasserdichter und Wasserdampf zurückhaltender Luftfilter 35 vorgesehen, durch den hindurch Luft ausgetauscht wird. Hierdurch wird das Entstehen von Temperaturgradienten zwischen dem Inneren des Elektronikraums 13 und der Umgebung deutlich reduziert und in von außen eindringender Luft enthaltene Feuchtigkeit wird zumindest teilweise zurückgehalten.

Zusätzlich wird durch den Luftfilter 35 ein Druckausgleich erreicht, wodurch verhindert wird, daß die Dichtung 32 am Deckel 27 des Elektronikraumes 13 belastet wird.

## Patentansprüche

1. Modular aufgebauter Messaufnehmer, der umfasst:
- einen in einem ersten Gehäuse angeordneten Sensorraum (5), in dem ein Sensor (7) untergebracht ist,
- einen in einem zweiten Gehäuse angeordneten Elektronikraum (13), in dem ein eine Elektronik enthaltender, insb. aus Kunststoff bestehender, Einsatz (15) untergebracht ist, sowie
- ein als ein integraler Bestandteil des Einsatzes (15) ausgebildetes Anschlusselement (19) zum elektrischen Anschließen des Sensors (7) an die Elektronik,
- wobei die beiden Gehäuse miteinander derart, insb. lösbar, verbunden
sind, dass zwischen dem Sensorraum (5) und dem Elektronikraum (13) ein Durchgang (17) gebildet ist, durch den der Elektronikraum (13) mit
dem Sensorraum (5) verbunden ist, und
- wobei sich das Anschlusselement (19) in den Durchgang (17) hinein erstreckt und diesen verschließt.

2. Messaufnehmer nach Anspruch 1, bei welchem Messaufnehmer das Anschlusselement (19) lösbar mit dem Sensor (7) verbunden ist.

3. Messaufnehmer nach Anspruch 1 oder 2, bei welchem Messaufnehmer jedes der beiden Gehäuse einen zylindrischen Abschnitt aufweist, wobei sich der Durchgang (17) durch die zylindrischen Abschnitte erstreckt.

4. Messaufnehmer nach dem vorherigen Anspruch, wobei der zylindrische Abschnitt des Gehäuses mit dem Elektronikraum (13) den zylindrischen Abschnitt des Gehäuses mit dem Sensorraum (5) koaxial umgreift.

5. Messaufnehmer nach einem der vorherigen Ansprüche, wobei der Sensor mittels Anschlussleitungen (25) mit dem Anschlusselement (19) verbunden ist, die in, insb. als Klemmstecker ausgebildete, Anschlüsse eirtgesteckt sind.

6. Messaufnehmer nach einem der vorherigen Ansprüche, der wenigstens eine zwischen dem Sensorraum (5) und dem Elektronikraum (13) angeordnete Dichtung umfasst.

7. Messaufnehmer nach einem der vorherigen Ansprüche, wobei es sich bei dem Sensor (7) um einen Drucksensor, einen Temperatursensor, eine kapazitive Füllstandssonde, ein Ultraschallsensor, ein Mikrowellen sendendes und empfangendes Mikrowellenmodul oder ein Durchflussmesser handelt.

8. Baukasten für das Fertigen eines Messaufnehmers nach einem der vorherigen Ansprüche, welcher Baukasten verschiedene Sensoren (7) und in jeweils einem Einsatz (15) untergebrachte Elektroniken umfasst, wobei verschiedene Elektroniken und Sensoren miteinander kombinierbar sind.

## Claims

1. Modular sensor, comprising:
- a sensor chamber (5) arranged in a first housing, in said chamber a sensor (7) is housed,
- an electronics chamber (13) arranged in a second housing, said electronics chamber housing an insert (15), which contains electronics and notably is made of plastic, and
- a connection element (19), which is designed as an integral part of the insert (15), and is used for the electrical connection of the sensor (7) to the electronics,
- wherein the two housings are connected to one another, particularly in a non-permanent manner, in such a way that a passage (17) is formed between the sensor chamber (5) and the electronics chamber (13) through said passage the electronics chamber (13) is connected to the sensor chamber (5), and
- wherein the connection element (19) extends into the passage (17) and seals said passage.

2. Sensor as claimed in Claim 1, wherein in said sensor the connection element (19) is connected to the sensor (7) in a non-permanent manner.

3. Sensor as claimed in Claim 1 or 2, wherein in said sensor each of the two housings has a cylindrical section, wherein the passage (17) extends through the cylindrical sections.

4. Sensor as claimed in the previous claim, wherein the cylindrical section of the housing with the electronics chamber (13) coaxially encompasses the cylindrical section of the housing with the sensor chamber (5).

5. Sensor as claimed in one of the previous claims, wherein the sensor is connected to the connection element (19) via connection wires (25) which are inserted into connections, particularly connections which are designed as clamping connectors.

6. Sensor as claimed in one of the previous claims, said sensor comprising at least one seal between the sensor chamber (5) and the electronics chamber (13).

7. Sensor as claimed in one of the previous claims, wherein the sensor (7) is a pressure sensor, a temperature sensor, a capacitance level probe, an ultrasonic sensor, a microwave module that transmits and receives microwaves, or a flowmeter.

8. Modular system for the production of a sensor as claimed in one of the previous claims, said modular system comprising various sensors (7) and electronics housed in an insert (15), wherein different electronics and sensors can be combined with one another.

## Revendications

1. Transmetteur de mesure modulaire, comprenant :
- une chambre de capteur (5) disposée dans un premier boîtier, dans laquelle est logé un capteur (7),
- une chambre d'électronique disposée dans un deuxième boîtier, dans laquelle est logé un insert (15), notamment constitué de matière plastique, contenant une électronique, ainsi que
- un élément de raccordement (19) constitué en tant que partie intégrante de l'insert (15), élément destiné au raccordement du capteur (7) à l'électronique,
- les deux boîtiers étant reliés entre eux, notamment de façon amovible, de telle manière qu'est formé entre la chambre de capteur (5) et la chambre d'électronique (13) un passage (17), à travers lequel la chambre d'électronique (13) est reliée avec la chambre de capteur (5), et
- l'élément de raccordement (19) s'étendant dans le passage (17) et obturant ce dernier.

2. Transmetteur de mesure selon la revendication 1, pour lequel l'élément de raccordement (19) est relié de façon amovible avec le capteur (7).

3. Transmetteur de mesure selon la revendication 1 ou 2, pour lequel chacun des deux boîtiers présente une section cylindrique, le passage (17) s'étendant à travers les sections cylindriques.

4. Transmetteur de mesure selon la revendication précédente, pour lequel la section cylindrique du boîtier avec la chambre d'électronique (13) entoure coaxialement la section cylindrique du boîtier avec la chambre de capteur (5).

5. Transmetteur de mesure selon l'une des revendications précédentes, pour lequel le capteur est relié avec l'élément de raccordement (19) au moyen de fils de raccordement, lesquels sont enfichés dans les connexions, notamment conçues sous la forme d'un connecteur à serrage.

6. Transmetteur de mesure selon l'une des revendications précédentes, lequel comprend au moins un joint disposé entre la chambre de capteur (5) et la chambre d'électronique (13).

7. Transmetteur de mesure selon l'une des revendications précédentes, pour lequel il s'agit, concernant le capteur (7), d'un capteur de pression, d'un capteur de température, d'une sonde de niveau capacitive, d'un capteur à ultrasons, d'un module à micro-ondes émettant et recevant des micro-ondes ou d'un débitmètre.

8. Système modulaire destiné à la fabrication d'un transmetteur de mesure selon l'une des revendications précédentes, lequel système modulaire comprend différents capteurs (7) et des électroniques logées respectivement dans un insert (15), différentes électroniques et différents capteurs pouvant être combinés entre-eux.
